# EUROPÄISCHE PATENTSCHRIFT

(11) **EP 2 425 474 B1**
(45) Veröffentlichungstag und Bekanntmachung des Hinweises auf die Patenterteilung: **13.12.2017**
(21) Anmeldenummer: 10725002.9
(22) Anmeldetag: 30.04.2010
(51) Int. Cl.: H01M 2/12, H01M 10/06, H01M 2/36, F16K 15/14

(54) **VENTILSTOPFEN**
VALVE PLUG
BONDE À SOUPAPE

(30) Priorität: 30.04.2009 DE 102009019346
(43) Veröffentlichungstag der Anmeldung: 07.03.2012
(73) Patentinhaber: Johnson Controls Autobatterie GmbH & Co. KGaA, 30419 Hannover (DE)
(72) Erfinder: STREUER, Peter, 30559 Hannover (DE); PIETZIEKATES, Karl-Heinz, 31515 Wunstorf (DE)
(74) Vertreter: Trinks, Ole
(86) Internationale Anmeldenummer: PCT/DE2010/000497
(87) Internationale Veröffentlichungsnummer: WO 2010/124684

(56) Entgegenhaltungen:
- EP-A1- 0 601 491
- EP-B1- 1 001 905
- WO-A2-03/057083
- DE-B- 1 196 258
- DE-B3- 10 349 395
- SU-A1- 1 023 460
- US-A1- 2007 166 606

## Beschreibung

Die Erfindung betrifft einen Ventilstopfen zum Abdichten einer Behälteröffnung mit einem auf die Behälteröffnung aufsetzbaren Ventilkörper aus einem ersten, steifen Kunststoffmaterial und einem integral mit dem Ventilkörper verbundenen Ventilelement aus einem zweiten, elastischen Kunststoffmaterial, das elastischer als das erste Kunststoffmaterial ist, wobei das Ventilelement eine auf eine die Behälteröffnung begrenzende Anlagekante aufsetzbaren Dichtflächenabschnitt und ein Verbindungsteil hat, das den Dichtflächenabschnitt in der gewünschten Position hält.

Derartige Ventilstopfen werden insbesondere zum Verschließen von Füll- und Kontrollöffnungen von Akkumulatoren, insbesondere von Blei-Säure-Batterien für Kraftfahrzeuge genutzt. Mit Hilfe der in den Ventilstopfen eingebauten Ventilelemente soll ein Gasaustritt ermöglicht werden, falls ein Überdruck in dem Batteriegehäuse entsteht.

Beispielsweise aus EP 1 194 962 B1 ist bekannt, eine elastische Kappe auf einen Rohrstutzen aufzusetzen, der eine Behälteröffnung einer Batteriezelle begrenzt. Oberhalb der elastischen Kappe ist ein den Batteriedeckel abschließender separater Verschlussdeckel aufgesetzt. Bei einem Überdruck kann Gas durch den Zwischenraum zwischen Rohrstutzen und elastischer Kappe aufgrund der elastischen Verformbarkeit der elastischen Kappe vom Zelleninneren nach Außen gelangen.

Aus der DE 1 196 258 B ist eine Verschlusskappe aus elastisch nachgiebigem Material für Füllstutzen für Akkumulatorgehäuse bekannt.

EP 1 001 905 B1 offenbart ein Dichtungsventil aus gummielastischem Material mit einem Stopfenteil, das in eine Behälteröffnung bis zu einem das Stopfenteil in radialer Richtung überragenden Stopfenkragen einführbar ist. An dem Stopfenteil ist mindestens ein Steuerkanal durch eine Ausnehmung im Stopfenteil ausgebildet, der sich von einer Unterseite des Stopfenteils in Richtung der Längsachse des Dichtungsventils bis zum Stopfenkragen erstreckt. An dem Stopfenkragen ist ein Dichtungswulst angeformt, der auf einen die Behälteröffnung umschließenden Behälterrand dichtend auflegbar ist. Zudem wird der Steuerkanal im Stopfenteil bis zum Dichtungswulst fortgeführt.

DE 103 49 395 B3 zeigt einen Ventilstopfen bei dem ein Ventil aus einem elastischen Material einstückig an einem Grundkörper angeformt ist, so dass das Ventil und der Grundkörper ein Mehrkomponenten- Spritzgussteil bilden. Das als Formteil einstückige elastische Ventil hat einen Ventilkörper und einen daran angeformten Dichtungslappen, der im Querschnitt dünner als der Ventilkörper ausgebildet ist. Der Dichtungslappen ist am unteren Außenrandbereich des Ventilkörpers angeformt und besitzt die Form einer halbkreisförmigen Scheibe, die zum Abdichten an der Innenkante einer Hülse im Ventilkörper anliegt.

Die Druckschrift WO 2003/057083A2 betrifft einen Ventilstopfen, der geeignet ist, eine Behälteröffnung abzudichten. Der aus diesem Stand der Technik bekannte Ventilstopfen weist einen auf die Behälteröffnung aufsetzbaren Ventilkörper aus einem ersten, steifen Kunststoffmaterial und einen integral mit dem Ventilkörper verbundenen Ventilelement aus einem zweiten, elastischen Kunststoffmaterial auf, wobei das zweite Kunststoffmaterial elastischer als das erste Kunststoffmaterial ist. Das Ventilelement hat einen auf eine Anlegekante dicht aufsetzbaren Dichtflächenabschnitt und ein Verbindungsteil, das sich vom Dichtflächenabschnitt radial durch eine Öffnung im Ventilkörper zu einem am außenumfang des Ventilkörpers gehaltenen Halteabschnitt hin erstreckt.

Ausgehend hiervon ist es Aufgabe der Erfindung, einen verbesserten Ventilstopfen zum Abdichten einer Behälteröffnung zu schaffen, wobei insbesondere das Ansprechen der Ventilfunktion besser definiert einstellbar ist.

Die Aufgabe wird mit dem Ventilstopfen gemäß Anspruch 1 gelöst.

Vorteilhaft wird der Dichtflächenabschnitt nicht wie bei bekannten Ventilstopfen durch eine axiale Abstützung angehalten, sondern maßgeblich durch ein sich in radialer Richtung durch die Aussparung des Ventilkörpers erstreckendes Verbin dungsteil. Durch eine Aussparung im Dichtflächenabschnitt wird erreicht, dass der federnde Bereich dort weicher als im übrigen Umfangsbereich des den Dichtflächenabschnitt auf die Anlagekante pressenden Verbindungsteils ist. Damit wird ein definiertes Ansprechen der Ventilfunktion in diesem Bereich ermöglicht. Das definierte Ansprechen wird zudem durch eine Dichtlippe gewährleistet, durch den die Gefahr des Verklebens des Dichtungsflächenabschnitts mit der Anlagekante der Behälteröffnung reduziert wird. Die Aussparung kann vorteilhaft als ringsegmentförmiger Schlitz ausgebildet sein.

Vorteilhaft ist es, wenn das Verbindungsteil den Dichtflächenabschnitt fest am Ventilkörper hält, so dass der Dichtflächenabschnitt im Bereich des Verbindungsteils nicht oder nur wenig elastisch nachgibt, während durch die definierte Aussparung im Dichtflächenabschnitt die gewünschte Elastizität des Dichtflächenabschnitts sichergestellt wird, wobei die Form der Aussparung den gewünschten Ansprechdruck des Ventilelements wesentlich bestimmt.

Vorteilhaft ist es, wenn der Dichtflächenabschnitt durch eine Öffnung im Ventilkörper radial nach außen geführt ist und integral mit einer an der Außenseite des Ventilkörpers angeformten Ringdichtung verbunden ist. Damit wird eine einteilige Ausführungsform des Ventilelementes der Ringdichtung erreicht, die bereits aufgrund ihrer Anordnung stabil im Ventilkörper getragen sind. Zudem wird die Fertigung durch die reduzierte Anzahl der Einspritzpunkte für die zwei unterschiedlichen Materialkomponenten vereinfacht.

Der Ventilstopfen ist vorzugsweise zum Einsatz in eine Füll- und Kontrollöffnung eines Akkumulators, insbesondere einer Bleistarterbatterie ausgestaltet und besitzt hierzu beispielsweise ein an geeigneter Stelle angeordnetes Außengewinde zum Einschrauben des Ventilstopfens in die Füll- und Kontrollöffnung sowie eine oder zwei im Abstand voneinander benachbarte Ringdichtungen.

Vorteilhaft ist es, wenn der Dichtflächenabschnitt eine in Richtung eines Stopfenteils weisende ringförmige Dichtlippe aufweist.

Vorteilhaft ist es, wenn die Höhe der Dichtlippe über ihren Umfang variiert, d. h. unterschiedliche Höhen aufweist.

Vorteilhaft ist es, wenn die Dichtlippe die größte Höhe im Bereich der Aussparung aufweist.

Vorteilhaft ist es, wenn die Materialdicke des Dichtflächenabschnitts auf der dem Halteabschnitt abgewandten Seite von dem Verbindungsteil fort ansteigt.

Vorteilhaft ist es, wenn die Materialdicke des Dichtflächenabschnitts linear ansteigt.

Durch die ungleichmäßige Ausbildung der Höhe der Dichtlippe oder der Materialdicke des Dichtflächenabschnitts wird eine Schräge gebildet. Durch die Schräge entsteht beim Einschieben des Dichtflächenabschnitts in den Ventilstopfen eine größere Vorspannung gegenüber dem darunter liegenden Stopfenteil, dessen zu dem Dichtflächenabschnitt gewandte Oberseite als Ventilsitz dient. Hierdurch kann eine verbesserte Ventilfunktion ermöglicht werden. Es wird dadurch erreicht, dass das Ventil vor einer völligen Entgasung eines Akkumulators rechtzeitig wieder schließt. Vorteilhaft befindet sich die dickste Stelle des Dichtflächenabschnitts bzw. der Dichtlippe im Bereich des zuvor erwähnten ringsegmentförmigen Schlitzes im Dichtflächenabschnitt. Vorteilhaft kann die ungleichmäßige Ausbildung der Höhe der Dichtlippe mit der ungleichmäßigen Ausbildung der Materialdicke kombiniert werden.

Die Erfindung wird nachfolgend anhand eines Ausführungsbeispiels mit den beigefügten Zeichnungen näher erläutert. Es zeigen:
- Figur 1: - Querschnittsansicht eines Ventilstopfens zum Einschrauben in einen Doppeldeckel einer Bleibatterie im Schnitt A-A (Figur 3);
- Figur 2: - Draufsicht auf einen Schnitt B-B des elastischen Ventilelementes;
- Figur 3: - Draufsicht auf den Ventilstopfen aus Figur 1;
- Figur 4: - eine weitere Ausführungsform eines Ventilstopfens; und
- Figur 5: - eine Detailansicht einer Ausführungsform des Dichtflächenabschnitts; und
- Figur 6: - eine Detailansicht einer weiteren Ausführungsform des Dichtflächenabschnitts.

In den Figuren werden gleiche Bezugszeichen für einander entsprechende Elemente verwendet.

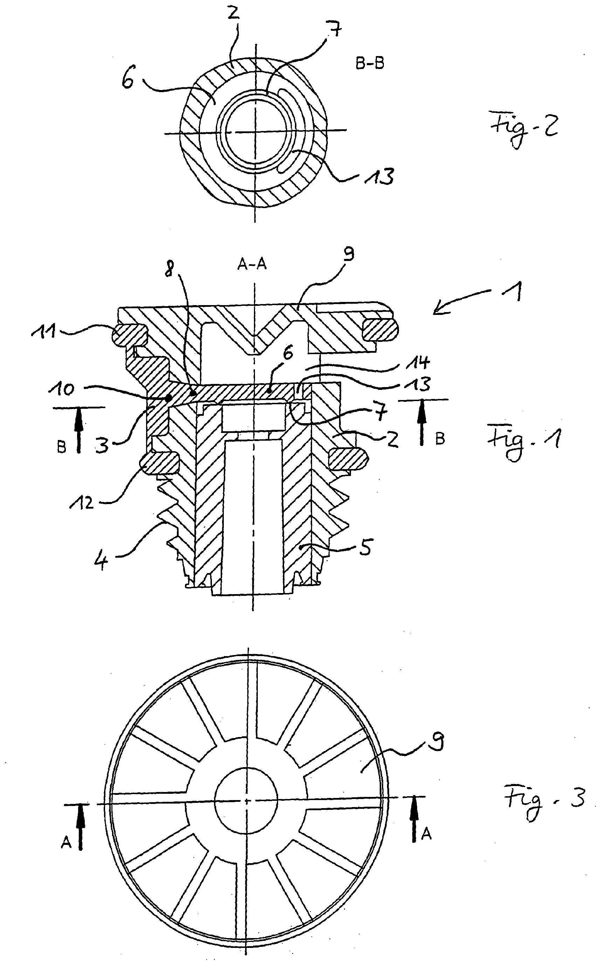

Figur 1 zeigt eine Querschnittsansicht einer Ausführungsform eines Ventilstopfens 1, der zum Einschrauben in einen Doppeldeckel einer Bleibatterie vorgesehen ist. Ein Doppeldeckel hat in an sich bekannter Weise einen an den Zellenraum angrenzenden Unterdeckel, einen mit Stegen abgegrenzten Hohlraum und einen den Deckel oben abschließenden Oberdeckel. Durch die sich zwischen dem Unter- und Oberdeckel erstreckenden Stege werden Labyrinthe bereitgestellt, durch die ein Gasstrom zu einer Entgasungsöffnung geleitet werden kann und in dem Elektrolyt gesammelt und in die Zellen zurückgeleitet werden kann.

Der dargestellte Schnitt A-A ist ein Querschnitt durch den Ventilstopfen 1.

Der Ventilstopfen 1 hat einen Ventilkörper 2, der aus einem ersten, steifen Kunststoffmaterial, wie beispielsweise Polypropylen PP. gebildet ist. An dem Ventilkörper 2 ist ein Ventilelement 3 aus einem zweiten, elastischen Kunststoffmaterial integral angeformt. Das zweite, elastische Kunststoffmaterial kann beispielsweise ein gummielastischer Werkstoff sein. Geeignet sind Fluorelastomere, Silikonkautschukmaterialien oder sonstige thermoelastische Elastomere.

An dem Ventilkörper 2 ist ein Außengewinde 4 angeformt, um den Ventilstopfen 1 in eine Behälteröffnung einzuschrauben. Der Ventilstopfen 1 weist ein profiliertes Deckelteil 9 auf.

Weiterhin ist in dem Ventilkörper 2 ein Stopfenteil 5 eingesetzt, das nach dem Ausformen des Ventilkörpers 2 und des integral damit verbundenen Ventilelementes 3 in dem Ventilkörper 2 eingeführt wird. Das Stopfenteil 5 kann im unteren Bereich durch Verschweißen oder thermoplastischer Verformung fest mit dem Ventilkörper 2 verbunden werden. Der Ventilstopfen 1 wird hergestellt, indem zunächst der Ventilkörper 2 im Spritzgussverfahren ausgeformt wird. Anschließend wird das zweite elastische Material mit Hilfe einer geeigneten Form in den Ventilkörper 2 eingespritzt, um das Ventilelement 3 zu bilden. Das Ventilelement 3 hat im Wesentlichen einen scheibenförmigen Dichtflächenabschnitt 6, der an seiner dem Stopfenteil 5 zugewandten Seite eine umlaufende ringförmige Erhebung in der Art einer Dichtlippe 7 trägt.

Das zweite, elastische Kunststoffmaterial wird nach außen über eine Einspritzbohrung geführt, um am oberen Umfang des Ventilkörpers 2 eine erste Ringdichtung 11 und im Abstand davon nach unten angrenzend an das Gewinde 4 eine zweite Ringdichtung 12 für den Unterdeckel zu bilden. Die erste Ringdichtung 11 ist für den Oberdeckel vorgesehen.

Der ein Ventil bildende Dichtflächenabschnitt 6 wird als flache Platte im Innenraum des Stopfens zusammen mit den Ringdichtungen 11, 12, einem Halteabschnitt 10 und ein Verbindungsteil 8 in einem Fertigungsvorgang angespritzt. Das hierbei entstehende Ventilelement 3 verbindet sich auch ringsum gasdicht mit der Wand des Ventilkörpers 2 des Stopfens. An der Unterseite der Platte 6 ist eine umlaufende Dichtlippe 7 angeformt. Diese kommt auf dem von unten eingeschobenen, als Ventilhalter dienenden Stopfenteil 5 zur Anlage und wird von dem Stopfenteil 5 mit einem Vordruck beaufschlagt, der gewährleistet, dass die Batterie einerseits entgasen kann, aber das Ventil bei einem minimalen Überdruck schließt bevor Sauerstoff eindringt.

Die Ventilfunktion wird durch eine ringförmige bzw. ringsegmentförmige, außerhalb der Dichtlippe 7 liegende Aussparung 13 in Form eines Schlitzes beeinflusst. Durch den Schlitz 13 wird an dieser Stelle die Steifigkeit des Dichtflächenabschnitts 6 geschwächt, so dass dieser Teil des Ventils bei definierten Drücken öffnet und schließt. Der Schlitz 13 kann unterschiedlich lang sein, je nach erforderlichem Ventilverhalten. Auch ist denkbar, den Schlitz 13 durch wenigstens einen Steg zu teilen.

Zusätzlich ist es möglich, oberhalb des Ventils 6 eine Stützrippe zur Stabilisierung vorzusehen. Außerdem kann die Materialdicke des Ventils 6 an der Oberseite im Bereich des Schlitzes 13 durch eine Stufe geschwächt werden, um eine feinere Ventilwirkung einzustellen. Weiterhin ist es möglich, zur Verbesserung der Ventilwirkung die Materialdicke außerhalb der Dichtlippe 7 durch Einformung von unten zu schwächen.

Die vorgeschlagene Art des Ventils 6 hat den Vorteil, dass es einfach zu fertigen ist. Vorhandene Stopfenformen können mit wenig Aufwand für die Produktion des Ventilstopfens angepasst werden.

Wie erwähnt, ist in dem Dichtflächenabschnitt 6 mindestens eine Aussparung 13 vorgesehen, in deren Bereich der Dichtflächenabschnitt 6 offen ist. Durch die Aussparung 13 wird der federnde Bereich weicher ausgestaltet, als im umliegenden Bereich des Dichtflächenabschnitts 6, und um so ein definiertes Ansprechen der Ventilfunktion in diesem Bereich ermöglicht. Im Bereich der Aussparung 13 ist ein Entgasungskanal 14 im Ventilstopfen 1 vorgesehen, der an einen Entgasungskanal im Doppeldeckel (nicht dargestellt) angrenzt.

Figur 2 lässt eine Schnittansicht durch den Dichtflächenabschnitt 6 erkennen. Es wird deutlich, dass der Dichtflächenabschnitt 6 eine ringsegmentförmige Aussparung 13 hat. Auch andere Formen der Aussparung 13 sind vorteilhaft einsetzbar.

Der Schnitt B-B aus Figur 2 ist in der Figur 1 dargestellt.

Figur 3 lässt eine Draufsicht auf den Ventilstopfen 1 aus Figur 1 erkennen. Dabei wird der Schnitt A-A der Figur 1 deutlich.

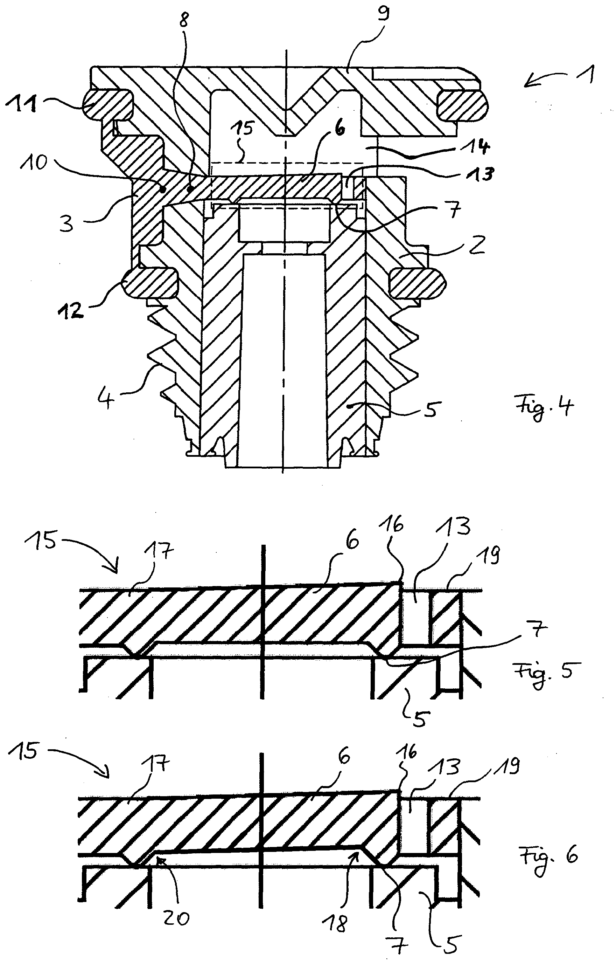

In der Figur 4 ist eine weitere Ausführungsform des Ventilstopfens 1 dargestellt, bei der ein nach Einsetzen in den Ventilkörper 2 schräg angeordneter Dichtflächenabschnitt 6 vorgesehen ist. Der entsprechend schräg an seiner Oberseite verlaufende Dichtflächenabschnitt 6 ist in dem durch gestrichelte Linien hervorgehobenen Bereich 15 oberhalb des Stopfenteils 5 vorgesehen. Der Bereich 15 ist in den Figuren 5 und 6 anhand zweier Ausführungsformen des Dichtflächenabschnitts 6 vergrößert als Ausschnitt dargestellt.

Gemäß Figur 5 ist ein Dichtflächenabschnitt 6 vorgesehen, dessen Materialdicke sich von dem Verbindungsteil 8 fort in Richtung zu der Aussparung 13 hin etwa linear vergrößert. Wie erkennbar ist, liegt die Oberseite des Dichtflächenabschnitts 6 an der Stelle 16 auf einem höheren Niveau als an der Stelle 17.

Gemäß Figur 6 ist ein Dichtflächenabschnitt 6 dargestellt, dessen Materialdicke im Wesentlichen gleich bleibend ist. Statt dessen ist die Höhe der ringförmigen Dichtlippe 7 über deren Umfang unterschiedlich groß. Wie erkennbar ist, ist die Dichtlippe 7 im Bereich 18 in der Nähe der Aussparung 13 deutlich größer als z.B. in dem Bereich 20. Auch hierdurch ergibt sich ein höheres Niveau der Oberfläche des Dichtflächenabschnitts 6 an der Stelle 16 im Vergleich zur Stelle 17.

Den Ausführungsformen gemäß den Figuren 4 bis 6 gemeinsam ist, dass der Dichtflächenabschnitt 6 im Bereich der Aussparung 13 bzw. im Bereich der Stelle 16 unter einer vergrößerten Vorspannung gegenüber der mit der Dichtlippe 7 in Kontakt stehenden Oberfläche des Ventilstopfens 5 steht. Die erhöhte Vorspannung zeigt sich im in dem Ventilstopfen 1 montierten Zustand des Dichtflächenabschnitts durch die höhere Niveaulage der Oberseite des Dichtflächenabschnitts 6 an der Stelle 16 im Vergleich zu dem Niveau an der Stelle 19. Im unmontierten Zustand des Dichtflächenabschnitts 6 entspannt sich dieser. Hierbei liegt die Stelle 16 etwa auf dem gleichen Niveau wie die Stellen 17 und 19.

Ein Entgasen verläuft bei dem erfindungsgemäßen Ventilstopfen wie folgt: Bei Aufbau eines entsprechenden Überdrucks innerhalb der Batterie bzw. des Stopfenteils 5 wird der Dichtflächenabschnitt 6 von unten mit einer sich aus dem Überdruck ergebenden Kraft beaufschlagt. Ab einem gewissen Überdruck öffnet die Ventilfunktion des Dichtflächenabschnitts 6, so dass die Dichtlippe 7 im Bereich der Aussparung 13 geringfügig von dem Stopfenteil 5 abhebt und einen Gas-Strömungskanal freigibt. Das ausströmende Gas kann dann durch die Aussparung 13 sowie den Entgasungskanal 14 austreten.

## Patentansprüche

1. Ventilstopfen (1) zum Abdichten einer Behälteröffnung mit einem auf die Behälteröffnung aufsetzbaren Ventilkörper (2) aus einem ersten, steifen Kunststoffmaterial und einem integral mit dem Ventilkörper (2) verbundenen Ventilelement (3) aus einem zweiten, elastischen Kunststoffmaterial, das elastischer als das erste Kunststoffmaterial ist, wobei das Ventilelement (3) einen auf eine Anlagekante dicht aufsetzbaren Dichtflächenabschnitt (6) und ein Verbindungsteil (8) hat, das sich vom Dichtflächenabschnitt (6) radial durch eine Öffnung im Ventilkörper (2) zu einem am Außenumfang des Ventilkörpers gehaltenen Halteabschnitt (10) hin erstreckt, **dadurch gekennzeichnet, dass** der Dichtflächenabschnitt (6) ohne axiale Abstützung des Dichtflächenabschnitt (6) von dem Verbindungsteil (8) gehalten ist, wobei in dem Dichtflächenabschnitt (6) mindestens eine Aussparung (13) in Form eines Schlitzes vorgesehen ist, in deren Bereich der Dichtflächenabschnitt (6) offen ist.

2. Ventilstopfen (1) nach Anspruch 1,
wobei die Aussparung (13) ringsegmentförmig ist.

3. Ventilstopfen (1) nach Anspruch 1 oder 2,
wobei der Halteabschnitt (10) integral mit mindestens einer an der Außenseite des Ventilkörpers angeformten Ringdichtung (11, 12) verbunden ist.

4. Ventilstopfen (1) nach einem der Ansprüche 1 bis 3,
wobei der Ventilstopfen (1) zum Einsatz in eine Füll- und Kontrollöffnung eines Akkumulators, insbesondere einer Bleibatterie ausgestaltet ist.

5. Ventilstopfen (1) nach einem der Ansprüche 1 bis 4,
wobei der Dichtflächenabschnitt (6) eine in Richtung eines Stopfenteils (5) weisende ringförmige Dichtlippe (7) aufweist.

6. Ventilstopfen (1) nach Anspruch 5,
wobei die Höhe der Dichtlippe (7) über ihren Umfang variiert.

7. Ventilstopfen (1) nach Anspruch 6,
wobei die Dichtlippe (7) die größte Höhe im Bereich der Aussparung (13) aufweist.

8. Ventilstopfen (1) nach einem der Ansprüche 1 bis 7,
wobei die Materialdicke des Dichtflächenabschnitts (6) auf der dem Halteabschnitt (10) abgewandten Seite von dem Verbindungsteil (8) fort ansteigt.

9. Ventilstopfen (1) nach Anspruch 8,
wobei die Materialdicke des Dichtflächenabschnitts (6) linear ansteigt.

## Claims

1. A valve plug (1) for sealing a container opening, comprising a valve body (2) made from a first rigid plastic material which is able to be placed on the container opening and a valve element (3) integrally connected to the valve body (2) made from a second elastic plastic material which is more elastic than the first plastic material, wherein the valve element (3) has a sealing surface section (6) able to be tightly fitted on a contact edge and a connecting part (8) which radially extends through an opening in the valve body (2) from the sealing surface section (6) to a retaining section (10) held on the outer circumference of the valve body, **characterized in that** the sealing surface section (6) is held by the connecting part (8) without an axial support of the sealing surface section (6), wherein at least one cutout (13) in the form of a slot is provided in the sealing surface section (6), in the area of which the sealing surface section (6) is open.

2. The valve plug (1) according to claim 1,
wherein the cutout (13) is of ring segment shape.

3. The valve plug (1) according to claim 1 or 2,
wherein the retaining section (10) is integrally connected to at least one annular seal (11, 12) integrally formed on the exterior of the valve body.

4. The valve plug (1) according to one of claims 1 to 3,
wherein the valve plug (1) is designed for use in a filling and monitoring opening of a rechargeable battery, in particular a lead-acid battery.

5. The valve plug (1) according to one of claims 1 to 4,
wherein the sealing surface section (6) comprises an annular sealing lip (7) pointing in the direction of a plug part (5).

6. The valve plug (1) according to claim 5,
wherein the height of the sealing lip (7) varies over its circumference.

7. The valve plug (1) according to claim 6,
wherein the sealing lip (7) exhibits the greatest height in the area of the cutout (13).

8. The valve plug (1) according to one of claims 1 to 7,
wherein the material thickness of the sealing surface section (6) increases away from the connecting part (8) on the far side from the retaining section (10).

9. The valve plug (1) according to claim 8,
wherein the material thickness of the sealing surface section (6) increases linearly.

## Revendications

1. Opercule de vanne (1) pour étancher une ouverture de récipient, comportant un corps de vanne (2) susceptible d'être posé sur l'ouverture de récipient et constitué en une première matière plastique rigide, et comportant un élément de vanne (3) relié intégralement au corps de vanne (2) et constitué en une seconde matière plastique élastique qui présente une élasticité supérieure à celle de la première matière plastique, l'élément de vanne (3) ayant une portion de surface d'étanchéité (6) susceptible d'être posée avec étanchéité sur une arête d'appui, et une partie de liaison (8) qui s'étend depuis la portion de surface d'étanchéité (6) radialement à travers une ouverture dans le corps de vanne (2) jusqu'à une portion de maintien (10) retenue à la périphérie extérieure du corps de vanne, **caractérisé en ce que**
la portion de surface d'étanchéité (6) est retenue par la partie de liaison (8) sans appui axial de la portion de surface d'étanchéité (6),
dans la portion de surface d'étanchéité (6) est prévue au moins une échancrure (13) sous la forme d'une fente au niveau de laquelle la portion de surface d'étanchéité (6) est ouverte.

2. Opercule de vanne (1) selon la revendication 1,
dans lequel l'échancrure (13) est en forme de segment annulaire.

3. Opercule de vanne (1) selon la revendication 1 ou 2,
dans lequel la portion de maintien (10) est reliée intégralement à au moins un joint annulaire (11, 12) conformé sur le côté extérieur du corps de vanne.

4. Opercule de vanne (1) selon l'une des revendications 1 à 3,
dans lequel l'opercule de vanne (1) est réalisé pour le mettre en place dans une ouverture de remplissage et de contrôle d'un accumulateur, en particulier d'une batterie au plomb.

5. Opercule de vanne (1) selon l'une des revendications 1 à 4,
dans lequel la portion de surface d'étanchéité (6) comprend une lèvre d'étanchéité annulaire (7) dirigée en direction d'une partie d'opercule (5).

6. Opercule de vanne (1) selon la revendication 5,
dans lequel la hauteur de la lèvre d'étanchéité (7) varie sur sa périphérie.

7. Opercule de vanne (1) selon la revendication 6,
dans lequel la lèvre d'étanchéité (7) présente la plus grande hauteur au niveau de l'échancrure (13).

8. Opercule de vanne (1) selon l'une des revendications 1 à 7,
dans lequel l'épaisseur du matériau de la portion de surface d'étanchéité (6) sur le côté détourné de la portion de maintien (10) augmente à partir de la partie de liaison (8).

9. Opercule de vanne (1) selon la revendication 8,
dans lequel l'épaisseur du matériau de la portion de surface d'étanchéité (6) augmente linéairement.
